# EUROPÄISCHE PATENTSCHRIFT

(11) **EP 1 639 762 B1**
(45) Veröffentlichungstag und Bekanntmachung des Hinweises auf die Patenterteilung: **08.10.2008**
(21) Anmeldenummer: 04705811.0
(22) Anmeldetag: 28.01.2004
(51) Int. Cl.: H04L 12/56

(54) **VERFAHREN ZUM ERHOEHEN DER MAXIMALEN ANZAHL VON SLAVE-GERAETEN IN EINEM BLUETOOTH-PIKONETZ UND MASTER-GERAET ZUR DURCHFUEHRUNG DES VERFAHRENS**
METHOD FOR INCREASING THE MAXIMUM NUMBER OF SLAVE UNITS IN A BLUETOOTH PICO NETWORK, AND MASTER UNIT FOR CARRYING OUT THIS METHOD
PROCEDE PERMETTANT D'AUGMENTER LE NOMBRE MAXIMAL D'APPAREILS ESCLAVES DANS UN PICO-RESEAU BLUETOOTH ET APPAREILS ESCLAVES DESTINES A LA MISE EN OEUVRE DE CE PROCEDE

(30) Priorität: 30.06.2003 DE 10329377
(43) Veröffentlichungstag der Anmeldung: 29.03.2006
(73) Patentinhaber: SIEMENS AKTIENGESELLSCHAFT, 80333 München (DE)
(72) Erfinder: RATERMANN, Albert, 58452 Witten (DE); SCHANZMANN, Martin, 46395 Bocholt (DE)
(86) Internationale Anmeldenummer: PCT/EP2004/000756
(87) Internationale Veröffentlichungsnummer: WO 2005/002146

(56) Entgegenhaltungen:
- EP-A- 1 294 130
- US-A1- 2002 193 073
- KALIA M ET AL: "EFFICIENT POLICIES FOR INCREASING CAPACITY IN BLUETOOTH: AN INDOOR$PICO-CELLULAR WIRELESS SYSTEM" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY: IEEE, US, Bd. 2 OF 3. CONF. 51, 15. Mai 2000 (2000-05-15), Seiten 907-911, XP000968001 ISBN: 0-7803-5719-1
- LEE T-J ET AL: "MODEL AND PERFORMANCE EVALUATION OF A PICONET FOR POINT-TO-MULTIPOINT COMMUNICATIONS IN BLUETOOTH" VTC 2001 SPRING. IEEE VTS 53RD. VEHICULAR TECHNOLOGY CONFERENCE. RHODES, GREECE, MAY 6 - 9, 2001, IEEE VEHICULAR TECHNOLGY CONFERENCE, NEW YORK, NY: IEEE, US, Bd. 2 OF 4. CONF. 53, 6. Mai 2001 (2001-05-06), Seiten 1144-1148, XP001067139 ISBN: 0-7803-6728-6

## Beschreibung

Die Erfindung betrifft ein Verfahren zum Betreiben eines Kurzstrecken-Funksende-/-Funkempfangssystems gemäß einem Kurzstreckenfunkkommunikationsstandard gemäß dem Oberbegriff des Anspruchs 1.

Der "Bluetooth-Standard" ist ein Kurzstreckenfunkstandard, der mit Trägerfrequenzen aus dem weltweit nicht lizenzierten "Industrial-", "Scientific-", "Medical" 2,4 GHz Band (ISM-Band) funktioniert und eine drahtlose Verbindung von Endgeräten (Devices) in einer Funkzelle mit einem Radius bis zu 10 Metern, in besonderen Fällen sogar bis über 100 Metern, ermöglicht, wobei die Trägerfrequenzen, um Funkinterferenzen zu verhindern, in einer (pseudo-)zufälligen Reihenfolge bis 1600mal pro Sekunde gewechselt werden. Für dieses Frequenzsprungverfahren "Frequency Hopping" sind bis zu 79 Frequenzen (Kanäle) im Bereich zwischen 2,402 und 2,480 GHz vorgesehen.

Bis zu acht nach dem Bluetooth-Standard funktionierende Geräte, auch als Devices bezeichnet, können in der - auch als "Pico-Zelle" bezeichneten - Funkzelle zu einem sogenannten "Pico-Netz" zusammengeschlossen werden und miteinander kommunizieren, wobei die einzelnen Devices - durch Zeitmultiplexverfahren realisiert - Mitglieder mehrerer Pico-Netze sein können, so dass diese Pico-Netze dadurch zu einem sogenannten "Scatter-Netz" verbunden sind.

Jedes Device in einem Pico-Netz, kann dieses Pico-Netz initialisieren. Ein Device, das ein Pico-Netz initialisiert hat, kontrolliert die restlichen Mitglieder des Pico-Netzes und synchronisiert deren Timer, daher wird es mit "Master" (Geräte-Master) bezeichnet, während die verbleibenden Mitglieder des Pico-Netzes mit "Slaves" bezeichnet werden.

Devices, die Mitglieder mehrerer Pico-Netze sind und diese Pico-Netze, die sich durch unterschiedliche Hopping-Kanal Folgen unterscheiden lassen, zu Scatter-Netzen vereinen, synchronisieren sich in jedem Multiplex-Zeitschlitz auf den jeweils aktuellen Master auf.

Bevor sie eine Verbindung im Pico-Netz aufbauen, befinden sich Bluetooth Geräte in einem Stromsparmodus "Standby-Modus". Dieser Standby-Modus ist kein Stromsparmodus im Bluetooth-Sinn. Vielmehr hat dieser Modus die Bedeutung, dass das Gerät initialisiert und bereit ist, Verbindungen aufzubauen oder anzunehmen. Dementsprechend gibt es in diesem Zustand auch kein zyklisches Suchen nach Nachrichten im Netz, da zu diesem Zeitpunkt noch kein Netz vorhanden ist. Allenfalls auf eine Gerätesuche (Inquiry) wird geantwortet. Dieser Prozess wird jedoch von einem anderen Gerät (Remote-Device) angestoßen und unterliegt deswegen keinem zeitlichen Schema.

Neben dem Standby-Modus ohne Netzverbindung ist noch eine Reihe weiterer Stromsparfunktionen möglich. Im "Hold-Modus" bleibt das Gerät in das Pico-Netz integriert, es werden aber keine Daten übertragen. Lediglich ein interner Timer läuft im Slave weiter. Bei Bedarf startet die Datenübertragung verzögerungsfrei. Der Hold-Modus kann vom Master für den Slave angeordnet werden. Anderseits kann der Slave den Master auffordern, ihn in diesen Modus zu schalten.

Im "Sniff-Modus" lauscht das Gerät in programmierbaren Abständen in das Netz. Auch hier läuft der Timer zur Synchronisation im Slave weiter.

Weiterhin lassen sich Geräte im Netz parken ("Park-Modus"). Hierbei verliert das Gerät seine Adresse im Netz, kann den Netzverkehr also nur mehr mit verfolgen und synchronisiert in größeren Abständen seinen internen Timer mit dem des Masters.

Nachteilig ist, dass ein Master-Gerät gemäß beispielsweise dem Bluetooth-Standard nur mit maximal 7 weiteren Geräten kommunizieren kann.

Aus den Dokumenten XP-000968001 "Efficient Policies for Increasing Capacity in Bluetooth: An Indoor Pico-Cellular Wireless System", M. Kalia et al, US 2002/0193073 A1 und XP-001067139 "Model and Performance Evaluation of a Piconet for Point-to-Multipoint Communications in Bluetooth", T.-J. Lee et al, wird offenbart, dass bei Vorhandensein von mehr als 7 Geräten die die Zahl 7 übersteigenden Geräte in einen Park-Modus geschaltet werden und dass fortlaufend nach einer vorgegebenen Strategie geparkte Geräte aktiv und aktive Geräte geparkt geschaltet werden.

Nachteilig ist, dass, wenn ein geparktes Gerät aktiv geschaltet werden soll, erst ein aktives Gerät geparkt geschaltet werden muss. Dies kostet Zeit, die das aktiv zu schaltende Gerät abwarten muss, bevor es aktiv geschaltet werden kann.

Aufgabe der vorliegenden Erfindung ist, ein Verfahrene anzugeben, mit dem die durch einen Standard wie zum Beispiel den Bluetooth-Standard festgelegte maximale Anzahl miteinander kommunizieren könnender Geräte in der Weise aufgebrochen wird, dass bei Vorhandensein von Geräten über die angegebene maximale Anzahl hinaus aktiv zu schaltende Geräte maximal schnell aktiv geschaltet werden können.

Diese Aufgabe wird bezüglich des Verfahrens ausgehend von einem Verfahren der eingangs genannten Art erfindungsgemäß durch ein Verfahren gelöst, das den im kennzeichnenden Teil des Anspruchs 1 angegebenen Verfahrensschritt aufweist.

Bezüglich des Verfahrens werden nicht nur die Anzahl von Geräten, die gemäß einem vorliegenden Standard die Anzahl der oberen Grenze miteinander kommunizieren könnender Geräte übersteigt, in einen Park-Modus geschaltet und werden nicht nur die in den Park-Modus geschalteten Geräte fortlaufend nach einer vorgegebenen Strategie aktiv und aktive Geräte geparkt geschaltet.

Danach wird gegenüber der Mindestanzahl von in den Park-Modus zu schaltender Geräte zusätzlich noch mindestens ein einziges weiteres Gerät in den Park-Modus geschaltet. Das hat den Vorteil, dass schnell ein Gerät in den Aktiv-Modus geschaltet werden kann und nicht erst ein anderes Gerät in den Park-Modus geschaltet werden muss. Dadurch ist ein beschleunigter Verfahrensablauf sichergestellt.

Vorteilhafte Ausgestaltungen der Erfindung sind Gegenstand von Unteransprüchen.

Wird für das Schalten in den Aktiv-Modus von geparkten Geräten die Strategie verwendet, in Zeitscheiben vorzugehen, hat das den Vorteil, dass keines der geparkten Geräte zu lange warten muss, bis es an die Reihe kommt.

Wird für das Schalten in den Aktiv-Modus von geparkten Geräten die Strategie verwendet, Prioritätskriterien zu berücksichtigen, hat das den Vorteil, dass höher priorisierte Vorgänge schneller zum Abarbeiten kommen.

Wird für das Schalten in den Aktiv-Modus von geparkten Geräten eine Mischstrategie aus den oben beschriebenen Strategien verwendet, führt dies zu einer zusätzlichen Optimierung des gesamten Ablaufs.

Eine Möglichkeit der Berücksichtigung von Prioritätskriterien ist, die Datenraten der Geräte zu analysieren und entsprechend zu berücksichtigen.
Nachfolgend wird ein Ausführungsbeispiel der Erfindung an Hand einer Zeichnung näher erläutert. Darin zeigen:
- Figur 1: eine schematische Darstellung eines Protokoll-Stacks mit erfindungsgemäßem Zusatz, und
- Figur 2: eine schematische Darstellung des Ablaufs des erfindungsgemäßen Verfahrens.

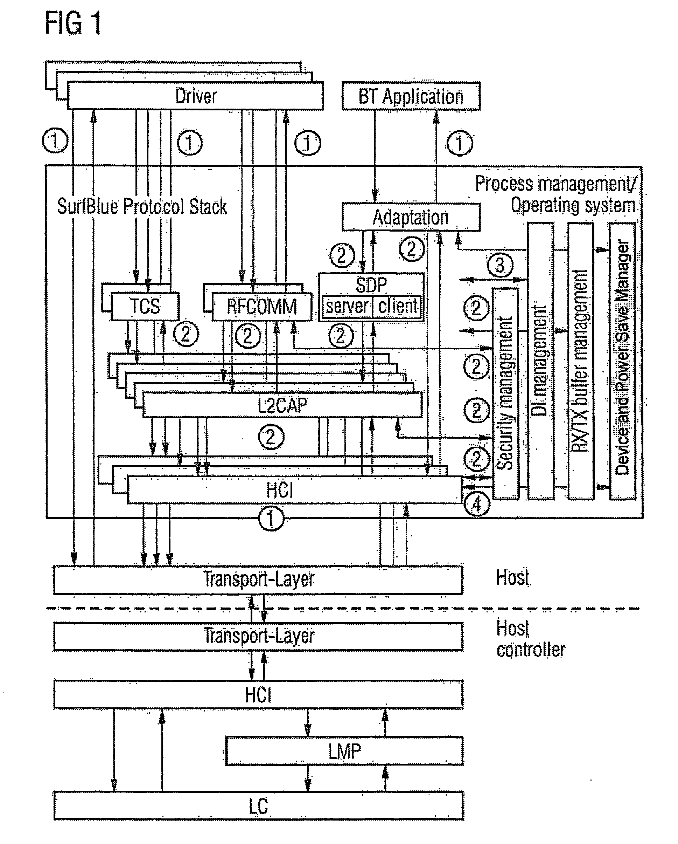

In der Figur 1 sind Funktionseinheiten von einem das erfindungsgemäße Verfahren ausführenden "Protocol Stack" (Stack) SURFBLUE dargestellt, wobei allgemein unter einem "Protocol Stack" eine Protokollsoftware verstanden wird für benachbarte, in Abhängigkeit stehende Schichten des OSI Referenzmodells, die funktional zusammengehören. Sie dient im Allgemeinen der Implementierung spezieller Netzwerkarchitekturen.

Die Architektur des dargestellten Stacks SURFBLUE ist in einem ein Bluetoothmodul aufnehmenden Wirt HOST implementiert und kommuniziert mit anderen Schichten (Applikations- und Transportschicht) bzw. ihnen zugeordneten Einheiten BT-APPLIKATION, DRIVER, TRANSPORT-LAYER über eine hierfür vorgesehene externe Schnittstelle 1.

Der Stack SURFBLUE weist mehrere Protokolle auf. Eines gemäß Bluetooth Standard vorgegebene Protokoll (Core Protocol), ist das "Logical Link Control and Adaptation Protocol" L2CAP, welches für aufsetzbare Protokolle verbindungsorientierte und verbindungslose (loopback) Verbindungen für höhere Protokollschichten.

Das logische Verbindungskontroll- und Anpassungs-Protokoll L2CAP weist über eine interne Schnittstelle 2 Verbindung zu einer Telefonkontroll-Protokoll-Spezifikation ("Telephony Control protocol Specification") TCS auf. Die Telefonkontroll-Protokoll-Spezifikation TCS umfasst im Allgemeinen zum einen ein bitorientiertes Protokoll, dass eine Rufkontrolle, Verbindungsaufbau, Sprachübertragung sowie Datenübertragung realisiert, und zum anderen setzt es AT-Befehle für Handys und Modems, zu deren Steuerung oder für eine Art FAX - Übertragung ab.

Das logische Verbindungskontroll- und Anpassungsprotokoll L2CAP ist über die interne Schnittstelle 2 zudem mit einem seriellen Kabelemulationsprotokoll RFCOMM verbunden, welches gemäß ETSI ZS 07.10 definiert ist und oberhalb des logischen Verbindungskontroll- und Anpassungsprotokolls L2CAP zur Emulation einer RS232 Verbindung wie ETSI TS 07.10 bei GSM, z.B. zur direkten Steuerung über AT Kommandos, dient.

Des weiteren weist das logische Verbindungskontroll- und Anpassungsprotokoll L2CAP über die interne Schnittstelle 2 eine Verbindung zu einem Lokalisierungs-Protokoll (Service Discovery Protocol) SDP auf, welches für die Lokalisierung der von Bluetooth-Geräten in Funkreichweite angebotenen Dienste zuständig ist und seinerseits über die interne Schnittstelle 2 mit der Anpassungsschicht ADAPTION des OSI Referenzmodells kommuniziert.

Das logische Verbindungskontroll- und Anpassungsprotokoll L2CAP kommuniziert darüber hinaus auch mit einer Wirtrechner-Kontroller-Schnittstelle (Host Controller Interface) HCI, welche notwendig ist, wenn ein Bluetooth Gerät über den Wirt HOST gesteuert wird.

Zu diesem Zweck kommuniziert die Wirtrechner-Kontroller-Schnittstelle HCI mit einer Vielzahl der beschriebenen Protokolle und Schichten, wie beispielsweise der Anpassungsschicht ADAPTION - über die interne Schnittstelle 2 - oder der Transportschicht TRANSPORT-LAYER - über die externe Schnittstelle 1.

Zur Umsetzung eines Prozessmanagements bzw. zum Betrieb des Stacks SURFBLUE weist der Stack SURFBLUE einige weitere Module auf, wie zum Beispiel das Modul zur Umsetzung von sicherheitsrelevanten Prozessen SECURITY-MANAGEMENT, welches über die interne Schnittstelle hierzu zumindest mit dem logischen Verbindungskontroll- und Anpassungsprotokoll L2CAP, dem Lokalisierungsprotokoll SDP sowie der Wirtrechner-Kontroller-Schnittstelle HCI verbunden ist, das Modul zur Umsetzung eines Gerätemanagements (Device Interface management) DI-MANAGEMENT sowie ein Modul für die Umsetzung eines Empfangs-/Sendepuffer Managements RX/TX-BUFFER-MANAGEMENT.

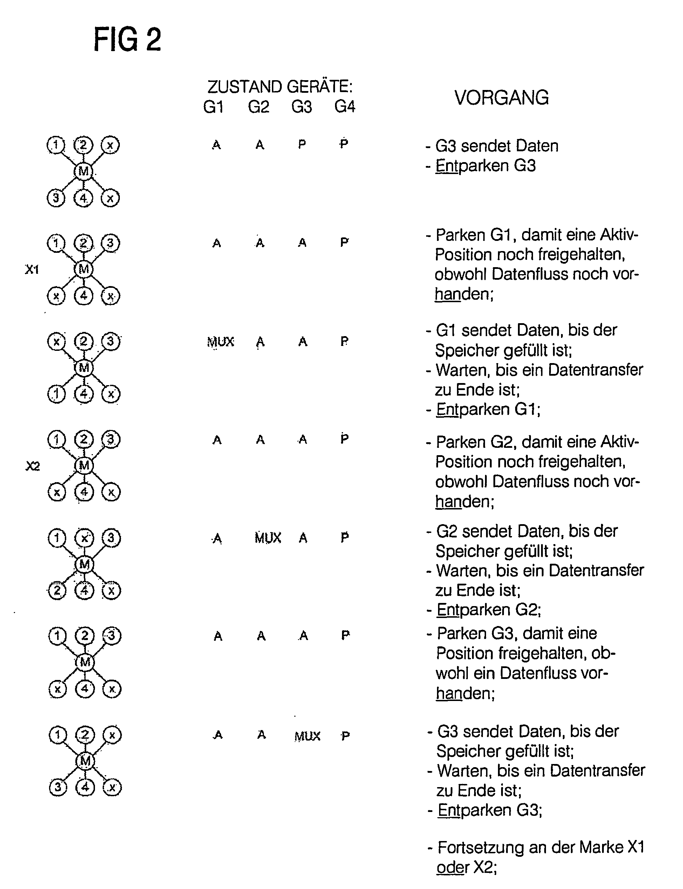

Darüber hinaus weist das Protokollstack SURFBLUE eine Energiesparsteuereinrichtung POWER-SAVE-MANAGER und zur Umsetzung des erfindungsgemäßen Verfahrens einen Geräte-Manager DEVICE MANAGER auf, die zumindest mit der Anpassungsschicht ADAPTION über eine eigene Anpassungsschicht-Powermanagement Schnittstelle 3 und der Wirtrechner-Kontroller-Schnittstelle über eine Wirtrechner-Kontroller-Schnittstelle-Powermanagementschnittstelle HCI zur Umsetzung des in der Figur 2 gezeigten Ausführungsbeispiels des erfindungsgemäßen Verfahrens verbunden ist.

In Bezug auf die Figur 2 sind zur Vereinfachung des Sachverhalts folgende Maßgaben berücksichtigt.

Das Maximum möglicher aktiver Geräte ist 3. Die maximale Anzahl von in den Park-Modus schaltbaren Geräten ist 3. Die Geräte G1, G2 und G3 senden Daten. Das Gerät G4 sendet keine Daten.

Zu Beginn des Ausführungsbeispiels befindet sich das Gerät G3 im Park-Modus. Der Buchstabe A steht für ein aktives Gerät. Der Buchstabe P steht für ein geparktes Gerät. Die Buchstabenfolge MUX steht für ein Gerät, das, obwohl es Daten sendet, in den geparkten Modus geschaltet ist und darauf wartet, wieder in den aktiven Modus geschaltet zu werden. Der Buchstabe M bezeichnet das Master-Gerät, welches die Steuerung durchführt.

Für die Figur 2 ist weiter angenommen, dass eine Möglichkeit, ein Gerät in den aktiven Modus zu schalten, frei gehalten ist.

Ausgehend vom Gerät G3, das Daten senden möchte und im geparkten Modus ist, wird das Gerät G3 in den aktiven Zustand geschaltet.

Dafür ist zum Beispiel an dieser Stelle das Gerät G1 in den geparkten Zustand zu schalten. Das Gerät G1 sendet noch so lange Daten, bis der Datenspeicher gefüllt ist. Anschließend wartet das Gerät G1, bis es wieder in den aktiven Zustand geschaltet wird. Dies ist der Fall, wenn eine andere Verbindung mit dem Datentransfer fertig ist. Ist dies der Fall, wird das Gerät G1 wieder in den aktiven Zustand geschaltet.

Dafür ist zum Beispiel an dieser Stelle das Gerät G2 in den geparkten Zustand zu schalten. Das Gerät G2 sendet noch so lange Daten, bis der Datenspeicher gefüllt ist. Anschließend wartet das Gerät G2, bis es wieder in den aktiven Zustand geschaltet wird. Dies ist der Fall, wenn eine andere Verbindung mit dem Datentransfer fertig ist. Ist dies der Fall, wird das Gerät G2 wieder in den aktiven Zustand geschaltet.

Dafür ist zum Beispiel an dieser Stelle das Gerät G3 in den geparkten Zustand zu schalten. Das Gerät G3 sendet noch so lange Daten, bis der Datenspeicher gefüllt ist. Anschließend wartet das Gerät G3, bis es wieder in den aktiven Zustand geschaltet wird. Dies ist der Fall, wenn eine andere Verbindung mit dem Datentransfer fertig ist. Ist dies der Fall, wird das Gerät G3 wieder in den aktiven Zustand geschaltet.

Dafür ist zum Beispiel an dieser Stelle wieder das Gerät G1 in den geparkten Zustand zu schalten und der Vorgang setzt sich fort an der Stelle X1. Möglich wäre auch gewesen, dass sich der Vorgang an der Stelle X2 fortsetzt.

## Patentansprüche

1. Verfahren zum Betreiben eines Kurzstrecken-Funksende-/-Funkempfangssystems gemäß einem Kurzstreckenfunkkommunikationsstandard, insbesondere dem "Bluetooth"-Standard, nach dem bis zu einer auf Grund des Standards festgelegten oberen Anzahl Geräte mit einem Master-Gerät kommunizieren, wobei bei Vorhandensein einer Anzahl von Geräten oberhalb der durch den Standard festgelegten oberen Anzahl von Geräten für die Kommunikation mit dem Master-Gerät zumindest die gemäß dem Standard festgelegte obere Anzahl übersteigende Anzahl an Geräten in einen Park-Modus geschaltet und fortlaufend nach einer vorgegebenen Strategie geparkte Geräte aktiv und aktive Geräte geparkt geschaltet werden, **dadurch gekennzeichnet, dass** zusätzlich zur Mindestanzahl an in den Park-Modus geschalteten Geräten mindestens ein einziges weiteres Gerät in den Park-Modus geschaltet wird.

2. Verfahren nach Anspruch 1, **dadurch gekennzeichnet, dass** die vorgegebene Strategie auf Zeitscheiben basiert, die den einzelnen Geräten zyklisch zugewiesen werden.

3. Verfahren nach Anspruch 1 oder 2, **dadurch gekennzeichnet, dass** die vorgegebene Strategie auf Prioritätskriterien basiert, nach denen eine dynamisch veränderbare Reihenfolge der Geräte festgelegt wird, in der die geparkten Geräte in den Aktiv-Modus geschaltet werden.

4. Verfahren nach Anspruch 3, **dadurch gekennzeichnet, dass** als Prioritätskriterium die Datenrate der einzelnen Geräte herangezogen wird.

5. Verfahren nach Anspruch 3 abhängig von Anspruch 2, **dadurch gekennzeichnet, dass** die vorgegebene Strategie auf einer Mischung aus Zeitscheibenzuordnung und Berücksichtigung von Prioritätskriterien basiert.

## Claims

1. Method for operating a short-haul radio transmitting/radio receiving system conforming to a short-haul radio communication standard, in particular the "Bluetooth" standard, according to which up to a maximum number of devices, which maximum is defined by the standard, communicate with a master device, wherein, if there are a number of devices present above the number maximum defined by the standard, for communicating with the master device at least the number of devices exceeding the maximum number defined according to the standard will be switched to a park mode and, continually in keeping with a predefined strategy, parked devices will be switched to active and active devices to parked, **characterised in that** at least one further device will be switched to the park mode in addition to the minimum number of devices switched to the park mode.

2. Method according to claim 1, **characterised in that** the predefined strategy is based on timeslices which are cyclically assigned to the individual devices.

3. Method according to claim 1 or 2, **characterised in that** the predefined strategy is based on priority criteria according to which a dynamically changeable sequence of devices is specified in which the parked devices are switched to the active mode.

4. Method according to claim 3, **characterised in that** the data rate of the individual devices is used as the priority criterion.

5. Method according to claim 3 dependent on claim 2, **characterised in that** the predefined strategy is based on a mixture of timeslice assignment and the taking of priority criteria into account.

## Revendications

1. Procédé pour exploiter un système radioémetteur / radiorécepteur courtes distances selon un standard de radiocommunication courtes distances, en particulier le standard Bluetooth, selon lequel au maximum un nombre plafond d'appareils, déterminé sur la base du standard, communique avec un appareil maître, en cas de présence d'un nombre d'appareils supérieur au nombre plafond d'appareils déterminé par le standard pour la communication avec l'appareil maître dans lequel, au moins le nombre d'appareils dépassant le nombre plafond déterminé selon le standard sont mis dans un mode de parc et des appareils parqués sont mis en mode actif et des appareils actifs, en mode de parc continuellement selon une stratégie prédéterminée, **caractérisé en ce que,** en plus du nombre minimum d'appareils mis en mode de parc, au moins un unique autre appareil est mis en mode de parc.

2. Procédé selon la revendication 1, **caractérisé en ce que** la stratégie prédéterminée se base sur des tranches de temps qui sont allouées cycliquement aux différents appareils.

3. Procédé selon la revendication 1 ou 2, **caractérisé en ce que** la stratégie prédéterminée se base sur des critères de priorité selon lesquels est déterminé un ordre des appareils, modifiable dynamiquement, dans lequel les appareils parqués sont mis en mode actif.

4. Procédé selon la revendication 3, **caractérisé en ce qu'**il est fait appel au débit de données des différents appareils en tant que critère de priorité.

5. Procédé selon la revendication 3 dépendante de la revendication 2, **caractérisé en ce que** la stratégie prédéterminée se base sur une combinaison d'allocation de tranches de temps et de prise en compte de critères de priorité.
